(19) **Europäisches Patentamt**
**European Patent Office**
**Office européen des brevets**

(11) **EP 3 920 290 A1**

(12) **EUROPEAN PATENT APPLICATION**
published in accordance with Art. 153(4) EPC

(43) Date of publication:
**08.12.2021 Bulletin 2021/49**

(51) Int Cl.:
***H01M 8/04298*** (2016.01)

(21) Application number: **19913418.0**

(22) Date of filing: **31.01.2019**

(86) International application number:
**PCT/CN2019/074187**

(87) International publication number:
**WO 2020/155018 (06.08.2020 Gazette 2020/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Weichai Power Co., Ltd.**
**Weifang, Shandong 261061 (CN)**

(72) Inventors:
• **ZHANG, Jie**
  **Weifang, Shandong 261061 (CN)**
• **ZHU, Luming**
  **Weifang, Shandong 261061 (CN)**
• **SUN, Xiaowen**
  **Weifang, Shandong 261061 (CN)**

(74) Representative: **Ipside**
**6, Impasse Michel Labrousse**
**31100 Toulouse (FR)**

(54) **POWER CONTROL METHOD AND FUEL CELL CONTROL SYSTEM**

(57) The embodiments of the present application provide a power control method and a fuel cell control system, said method comprising: a controller acquiring, in real time, the cell output voltage, cell output current and cell output power of a fuel cell, and the output voltage and output current of a DC-DC conversion circuit; calculating, in a dual-closed-loop nonlinear control unit, a target output voltage of the DC-DC conversion circuit, the cell output voltage, the cell output current, a calculation instruction value, and the output voltage and output current of the DC-DC conversion circuit, so as to obtain a control instruction value of a real-time pulse width modulation gate circuit; and the real-time pulse width modulation gate circuit regulating the output voltage and output current of the DC-DC conversion circuit on the basis of the control instruction value, so as to achieve cell output power within a preset power range. In this solution, the cell output power is controlled to be kept within the preset power range by means of data acquired in real time, improving the practicability, controllability and stability of the fuel cell control system.

A controller acquires a cell output voltage, a cell output current, and a cell output power of a fuel cell, as well as an output voltage and an output current of a DC-DC conversion circuit in real time — S101

A dual closed-loop nonlinear control unit calculates an control instruction of a real-time pulse width modulation gate-level circuit based on a target output voltage of the DC-DC conversion circuit, the cell output voltage, the cell output current, an calculation instruction, the output voltage and the output current of the DC-DC conversion circuit — S102

A real-time pulse width modulation gate-level circuit regulates the output voltage and the output current of the DC-DC conversion circuit based on the control instruction, to control a cell output power to be within a predetermined power range — S103

**Figure 1**

**Description**

**FIELD**

The present disclosure relates to the technical field of automatic control, and in particular to a method for controlling power and a system for controlling a fuel cell.

**BACKGROUND**

With the development of science and technology, new energy gradually becomes focus of attention in various industries, and new energy technology is gradually applied to various industries. A power generation system formed by simply connecting a fuel cell stack and a DC-DC voltage converter in series is commonly applied to industries such as vehicles and ships to provide drive energy for vehicles and ships.

There is a non-linear relationship between an output voltage of a fuel cell and a load current in the power generation system. That is, the output voltage drops at a rate varying with load currents. For example, in a case of a small load current, the output voltage drops at a rate significantly different from a rate at which the output voltage drops in a case of a large load current, resulting in small output power of the power generation system. When supplying power to a load, the conventional power generation system does not control the load current. As a result, the output power of the fuel cell is low. In a case of a relatively large or small load current, the power generation system cannot meet a power demand of the load.

Therefore, the conventional power generation system has problems such as low practicability, low real-time controllability and low stability.

**SUMMARY**

A method for controlling power and a system for controlling a fuel cell are provided according to the present disclosure, to solve the problems such as low practicability, low real-time controllability and low stability in a conventional power generation system.

In order to realize the above objects, the following technical solutions are provided according to the present disclosure.

A method for controlling power is provided according to a first aspect of the present disclosure. The method is applicable to a system for controlling a fuel cell. The system for controlling a fuel cell includes a controller, a DC-DC conversion circuit connected to the controller, a real-time pulse width modulation gate-level circuit connected to the DC-DC conversion circuit and the controller. An input end of the DC-DC conversion circuit is for connecting the fuel cell. The controller includes a dual closed-loop nonlinear control unit. The method includes: acquiring, by the controller in real time, a cell output voltage of the fuel cell, a cell output current, and cell output power of the fuel cell, and an output voltage and an output current of the DC-DC conversion circuit; calculating, by the dual closed-loop nonlinear control unit, a control instruction of the real-time pulse width modulation gate-level circuit based on a target output voltage of the DC-DC conversion circuit, the cell output voltage, the cell output current, a calculation instruction, the output voltage and the output current of the DC-DC conversion circuit, where the calculation instruction is determined based on the cell output current and the cell output power; and regulating, by the real-time pulse width modulation gate-level circuit, the output voltage and the output current of the DC-DC conversion circuit in response to the control instruction, to control output power of the fuel cell to be within a predetermined power range, where the predetermined power range is determined based on power indicated by $\Delta P/\Delta I_m = 0$, where $\Delta P$ represents a difference between the cell output power and previous cell output power, and $\Delta I_m$ represents a difference between the cell output current and a previous cell output current.

Preferably, the calculating, by the dual closed-loop nonlinear control unit, a control instruction of the real-time pulse width modulation gate-level circuit based on a target output voltage of the DC-DC conversion circuit, the cell output voltage, the cell output current, a calculation instruction, the output voltage and the output current of the DC-DC conversion circuit includes: acquiring a difference by subtracting the output voltage of the DC-DC conversion circuit from the target output voltage, to calculate a current control instruction according to a voltage loop transfer function; limiting the current control instruction based on a limitation current to obtain a target to be current inputted to the DC-DC conversion circuit by the fuel cell, where the limitation current is calculated according to a predetermined nonlinear real-time intervention transfer function based on the output current of the DC-DC conversion circuit and the cell output voltage; calculating a sum of the target current and the calculation instruction to obtain a given current; and acquiring a difference by subtracting an output current feedback from the given current, to obtain the control instruction of the real-time pulse width modulation gate-level circuit, where the output current feedback is calculated according to a predetermined current feedback transfer function based on the output current of the DC-DC conversion circuit.

Preferably, the calculation instruction is determined based on the cell output current and the cell output power by: calculating the calculation instruction $I_{Fcm}(k)$ according to an equation

$$I_{Fcm}(k) = \begin{cases} I_{Fcm}(k\text{-}1) + k_i * \Delta I_{Fcm}, & \dfrac{\Delta P}{\Delta I_m} > 0 \\ I_{Fcm}(k\text{-}1) - k_i * \Delta I_{Fcm}, & \dfrac{\Delta P}{\Delta I_m} < 0 \\ I_{Fcm}(k\text{-}1), & \dfrac{\Delta P}{\Delta I_m} = 0 \end{cases}$$

based on a ratio of $\Delta P$ to $\Delta I_m$, where $I_{Fcm}(k\text{-}1)$ represents a previous calculation instruction, $k_i$ represents a regulator parameter; and $\Delta I_{Fcm}$ represents a predetermined signal increment of a current, and is determined based on the ratio of $\Delta P$ to $\Delta I_m$.

Preferably, the regulating, by the real-time pulse width modulation gate-level circuit, the output voltage and the output current of the DC-DC conversion circuit in response to the control instruction, to control output power of the fuel cell to be within a predetermined power range includes: regulating, by the real-time pulse width modulation gate-level circuit, the output voltage and the output current of the DC-DC conversion circuit in response to the control instruction, to control the output power of the fuel cell to be within a predetermined power range indicated by $(0\text{-}a) \leq \Delta P/\Delta I_m \leq (0+a)$, where a is a real number greater than or equal to 0.

Preferably, the method further includes: transmitting a warning signal to a pre-stage controller in a case that $\Delta P/\Delta I_m$ is greater than $(0+a)$ or less than $(0\text{-}a)$, where the pre-stage controller include at least a vehicle control unit.

A system for controlling a fuel cell is further provided according to a second aspect of the present disclosure. The system includes a controller, a DC-DC conversion circuit connected to the controller, a real-time pulse width modulation gate-level circuit connected to the DC-DC conversion circuit and the controller. An input end of the DC-DC conversion circuit is configured to connect the fuel cell. The controller includes a double closed-loop nonlinear control unit. The controller is configured to acquire a cell output voltage, a cell output current and cell output power of the fuel cell, and an output voltage and an output current of the DC-DC conversion circuit in real time. The double closed-loop nonlinear control unit is configured to calculate a control instruction of the real-time pulse width modulation gate-level circuit based on a target output voltage of the DC-DC conversion circuit, the cell output voltage, the cell output current, a calculation instruction, the output voltage and the output current of the DC-DC conversion circuit. The calculation instruction is determined based on the cell output current and the cell output power. The real-time pulse width modulation gate-level circuit is configured to regulate the output voltage and the output current of the DC-DC conversion circuit in response to the control instruction, to control output power of the fuel cell to be within a predetermined power range. The predetermined power range is determined based on power indicated by $\Delta P/\Delta I_m = 0$. $\Delta P$ represents a difference between the cell output power and previous cell output power, and $\Delta I_m$ represents a difference between the cell output current and a previous cell output current.

Preferably, the dual closed-loop nonlinear control unit is further configured to: acquire a difference by subtracting the output voltage of the DC-DC conversion circuit from the target output voltage, to calculate a current control instruction according to a voltage loop transfer function; limit the current control instruction based on a limitation current to obtain a target to be current inputted to the DC-DC conversion circuit by the fuel cell; calculate a sum of the target current and the calculation instruction to obtain a given current; and acquire a difference by subtracting an output current feedback from the given current, to obtain the control instruction of the real-time pulse width modulation gate-level circuit. The limitation current is calculated according to a predetermined nonlinear real-time intervention transfer function based on the output current of the DC-DC conversion circuit and the cell output voltage. The output current feedback is calculated according to a predetermined current feedback transfer function based on the output current of the DC-DC conversion circuit.

Preferably, the dual closed-loop nonlinear control unit is further configured to: calculate the calculation instruction

$$I_{Fcm}(k) = \begin{cases} I_{Fcm}(k\text{-}1) + k_i * \Delta I_{Fcm}, & \dfrac{\Delta P}{\Delta I_m} > 0 \\ I_{Fcm}(k\text{-}1) - k_i * \Delta I_{Fcm}, & \dfrac{\Delta P}{\Delta I_m} < 0 \\ I_{Fcm}(k\text{-}1), & \dfrac{\Delta P}{\Delta I_m} = 0 \end{cases}$$

$I_{Fcm}(k)$ according to an equation based on a ratio of $\Delta P$ to $\Delta I_m$, where $I_{Fcm}(k\text{-}1)$ represents a previous calculation instruction, $k_i$ represents a regulator parameter, and $\Delta I_{Fcm}$ represents a predetermined signal increment of a current, and is determined based on the ratio of $\Delta P$ to $\Delta I_m$.

Preferably, the the real-time pulse width modulation gate-level circuit is configured to regulate the output voltage and the output current of the DC-DC conversion circuit in response to the control instruction, to control the output power of the fuel cell to be within a predetermined power range indicated by $(0\text{-}a) \leq \Delta P/\Delta I_m \leq (0+a)$, where a is a real number greater than or equal to 0.

Preferably, the controller is further configured to transmit a warning signal to a pre-stage controller in a case that $\Delta P/\Delta I_{\mathrm{m}}$ is greater than (0+a) or less than (0-a), where the pre-stage controller include at least a vehicle control unit.

A method for controlling power and a system for controlling a fuel cell are provided according to embodiments of the present disclosure. In the method, the controller acquires the cell output voltage, the cell output current, the cell output power, as well as the output voltage and the output current of the DC-DC conversion circuit in real time. The dual closed-loop nonlinear control unit calculates the control instruction of the real-time pulse width modulation gate-level circuit based on the target output voltage of the DC-DC conversion circuit, the cell output voltage, the cell output current, the calculation instruction, as well as the output voltage and the output current of the DC-DC conversion circuit. The real-time pulse width modulation gate-level circuit regulates the output voltage and the output current of the DC-DC conversion circuit in response to the control instruction to control the output power of the fuel cell to be within the predetermined power range. In the solutions according to the present disclosure, the dual closed-loop nonlinear control unit calculates the control instruction of the real-time pulse width modulation gate-level circuit based on data of the fuel cell and data of the DC-DC conversion circuit that are acquired in real time. The real-time pulse width modulation gate-level circuit regulates the output voltage and the output current of the DC-DC conversion circuit in response to the control instruction, to control the output power of the fuel cell to be within the predetermined power range, thereby improving practicability, controllability and stability of the system for controlling a fuel cell.

**BRIEF DESCRIPTION OF THE DRAWINGS**

In order to more clearly describe the technical solutions in the embodiments of the present disclosure, drawings to be used in the description of the embodiments are briefly described hereinafter. It is apparent that the drawings described hereinafter show merely the embodiments of the present disclosure, and those skilled in the art may obtain other drawings based on the provided drawings without any creative effort.

Figure 1 is a flowchart of a method for controlling power according to an embodiment of the present disclosure;

Figure 2 is a flowchart showing a process for calculating a control instruction according to an embodiment of the present disclosure;

Figure 3 is a schematic structural diagram of a system for controlling a fuel cell according to an embodiment of the present disclosure;

Figure 4 is a schematic diagram showing division of a predetermined power range according to an embodiment of the present disclosure; and

Figure 5 is a structural block diagram of a system for controlling a fuel cell according to an embodiment of the present disclosure.

**DETAILED DESCRIPTION OF EMBODIMENTS**

The technical solutions in the embodiments of the present disclosure are clearly and completely described hereinafter in conjunction with the drawings of the embodiments of the present disclosure. Apparently, the embodiments described in the following are only some rather than all the embodiments of the present disclosure. All other embodiments obtained by those skilled in the art based on the embodiments in the present disclosure without any creative effort fall within the protection scope of the present disclosure.

As described in the background part, there is a non-linear relationship between an output voltage of a fuel cell and a load current in the power generation system. That is, the output voltage drops at a rate varying with load currents. When supplying power to a load, the conventional power generation system does not control the load current. As a result, the output power of the fuel cell is low. In a case of a relatively large or small load current, the power generation system cannot meet a power demand of the load

Therefore, a method for controlling power and a system for controlling a fuel cell are provided according to the present disclosure, to regulate an output voltage and an output current of a DC-DC conversion circuit, so as to control an output power of the fuel cell to be within a predetermined power range.

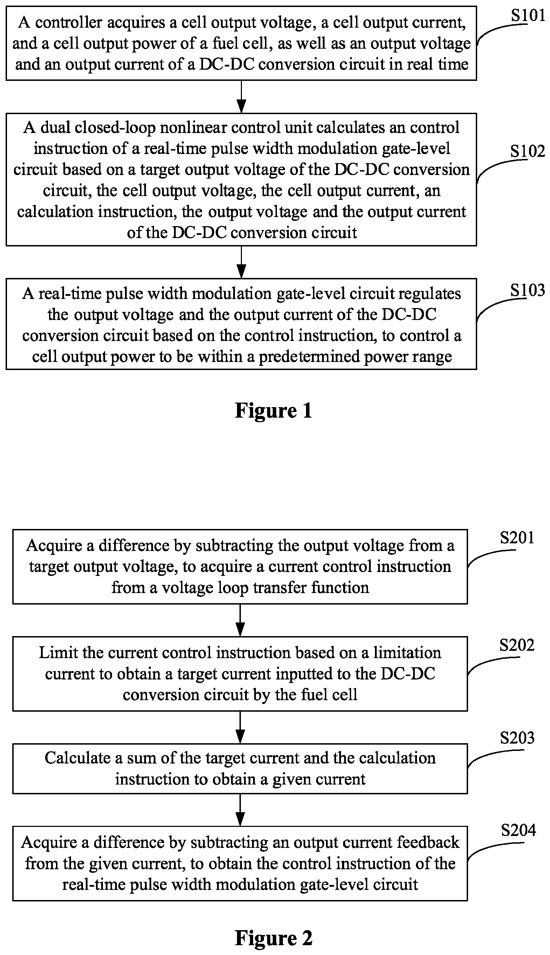

Reference is made to Figure 1, which is a flowchart of a method for controlling power according to an embodiment of the present disclosure. The method is applicable to a system for controlling a fuel cell. The system for controlling a fuel cell includes a controller, a DC-DC conversion circuit connected to the controller, a real-time pulse width modulation gate-level circuit connected 5 to the DC-DC conversion circuit and the controller. An input end of the DC-DC conversion circuit is for connecting the fuel cell. The controller includes a dual closed-loop nonlinear control unit. The method includes the following steps S101 to S103.

In step S101, the controller acquires a cell output voltage, a cell output current, and a cell output power of the fuel cell, as well as an output voltage and an output current of the DC-DC conversion circuit in real time.

In an implementation of step S101, a voltage sensor and a current sensor are arranged at an output end of the DC-DC conversion circuit, to acquire the output voltage and the output current of the DC-DC conversion circuit. A voltage sensor and a current sensor are arranged at an input end of the DC-DC conversion circuit, to acquire the cell output voltage and the cell output current. The cell output power calculated by multiplying the cell output voltage by the cell output current.

In step S102, the dual closed-loop nonlinear control unit calculates a control instruction of the real-time pulse width modulation gate-level circuit based on a target output voltage of the DC-DC conversion circuit, the cell output voltage, the cell output current, a calculation instruction, as well as the output voltage and the output current of the DC-DC conversion circuit.

A dual closed-loop nonlinear control model is constructed in the dual closed-loop nonlinear control unit in advance. The dual closed-loop nonlinear control model is for processing input data inputted into the dual closed-loop nonlinear control model based on a predetermined control strategy, to obtain output data that meets a predetermined requirement.

In an implementation of step S102, the target output voltage of the DC-DC conversion circuit, the cell output voltage, the cell output current, the calculation instruction, and the output voltage and the output current of the DC-DC conversion circuit are inputted to the dual closed-loop nonlinear control model, to calculate the control instruction of the real-time pulse width modulation gate-level circuit. The calculation instruction is determined based on the cell output current and the cell output power. The calculation instruction $I_{Fcm}(k)$ is calculated based on a ratio of $\Delta P$ to $\Delta I_m$ according to the following equation (1).

The equation (1) is expressed as:

$$I_{Fcm}(k) = \begin{cases} I_{Fcm}(k\text{-}1) + k_i * \Delta I_{Fcm}, & \Delta P \big/ \Delta I_m > 0 \\ I_{Fcm}(k\text{-}1) - k_i * \Delta I_{Fcm}, & \Delta P \big/ \Delta I_m < 0 \\ I_{Fcm}(k\text{-}1), & \Delta P \big/ \Delta I_m = 0 \end{cases} \qquad (1)$$

In the above equation (1), $I_{Fcm}(k\text{-}1)$ represents a previous calculation instruction. $k_i$ represents a regulator parameter. $\Delta I_{Fcm}$ represents a predetermined signal increment of a current, and is determined based on a ratio of $\Delta P$ to $\Delta I_m$. $\Delta P$ represents a difference between a present cell output power and a previous cell output power. $\Delta I_m$ represents a difference between a present cell output current and a previous cell output current.

It should be noted that the target output voltage is determined by a technician according to actual conditions.

In step S103, the real-time pulse width modulation gate-level circuit regulates the output voltage and the output current of the DC-DC conversion circuit in response to the control instruction, to control output power of the fuel to be within the predetermined power range.

In an implementation of step S103, the predetermined power range is determined based on power indicated by $\Delta P/\Delta I_m = 0$, and the output power of the fuel cell within a predetermined power range indicated by $0\text{-}a \leq \Delta P/\Delta I_m \leq 0\text{+}a$ is obtained, where a is a real number greater than or equal to 0. The real-time pulse width modulation gate-level circuit regulates a duty cycle of a power electronic switch element in the DC-DC conversion circuit in response to the control instruction, so as to regulate the output voltage and the output current of the DC-DC conversion.

It should be noted that a is determined by the technician according to actual conditions. The power electronic switch element in the DC-DC conversion circuit includes but is not limited to a Metal-Oxid-Semiconductor Field-Effect Transistor (MOSFET).

Preferably, in a case that $\Delta P/\Delta I_m$ is greater than $(0\text{+}a)$ or less than $(0\text{-}a)$, the controller transmits a warning signal to a pre-stage controller. The pre-stage controller include at least a vehicle control unit. For example, the controller transmits a warning signal to a computer controlling the controller.

In the embodiments of the present disclosure, the dual closed-loop nonlinear control unit calculates the control instruction of the real-time pulse width modulation gate-level circuit based on data of the fuel cell and data of the DC-DC conversion circuit. The data of the fuel cell and data of the DC-DC conversion circuit are acquired in real time. The real-time pulse width modulation gate-level circuit regulates the output voltage and the output current of the DC-DC conversion circuit in response to the control instruction, to control the output power of the fuel cell to be within the predetermined power range, thereby improving practicability, controllability and stability of the system for controlling a fuel cell.

For details of calculating the control instruction of the real-time pulse width modulation gate-level circuit in step S102 shown in Figure 1, one may refer to Figure 2, which is a flowchart showing a process for calculating the control instruction according to an embodiment of the present disclosure. The process includes the following steps S201 to S204.

In step S201, a difference by subtracting the output voltage of the DC-DC conversion circuit from the target output voltage is acquired, to calculate a current control instruction according to a voltage loop transfer function.

In an implementation of step S201, the output voltage of the DC-DC conversion circuit is subtracted from the target output voltage by a comparison module to obtain the difference. The difference is inputted to the voltage loop transfer function that is pre-designed, to obtain the current control instruction.

It should be noted that a transfer function refers to a ratio of Laplace transformation of an output of a linear system to Laplace transformation of an input of the linear system under a zero initial condition. The transfer function is expressed as the following equation (2).

The equation (2) is expressed as:

$$G(s)=Y(s)/U(s) \qquad (2)$$

In the above equation (2), Y(s) represents the output of a linear system, and U(s) represents the input of the linear system.

It should be noted that the voltage loop transfer function is determined by the technician according to requirements for a voltage in actual conditions.

In step S202, the current control instruction is limited based on a limitation current, to obtain a target current that is inputted to the DC-DC conversion circuit by the fuel cell.

In an implementation of step S202, the limitation current and the current control instruction are inputted to a nonlinear real-time adjustable limiting module, to limit the current control instruction based on the limitation current, so as to obtain the target current that is inputted to the DC-DC conversion circuit. The limitation current is calculated according to a predetermined nonlinear real-time intervention transfer function based on the output current of the DC-DC conversion circuit and the cell output voltage. That is, the output current of the DC-DC conversion circuit and the cell output voltage are inputted to the nonlinear real-time intervention transfer function to obtain the limitation current.

It should be noted that the nonlinear real-time intervention transfer function is determined by the technician according to requirements for the limitation current in actual conditions. The limiting module includes but is not limited to the nonlinear real-time adjustable limiting module.

In step S203, a sum of the target current and the calculation instruction is calculated to obtain a given current.

In an implementation of step S203, for a process for calculating the calculation instruction, one may refer to details in step S102 shown in Figure 1 according to the embodiment of the present disclosure. Therefore, the process for calculating the calculation instruction is not repeated here.

In step S204, a difference by subtracting an output current feedback is subtracted from the given current is acquired, to calculate the control instruction of the real-time pulse width modulation gate-level circuit.

In an implementation of step S204, the output current feedback is subtracted from the given current in a comparison module to obtain the difference, so as to calculate the control instruction of the real-time pulse width modulation gate-level circuit. The output current feedback is acquired from a predetermined current feedback transfer function based on the output current of the DC-DC conversion circuit. That is, the output current of the DC-DC conversion circuit is inputted to the current feedback transfer function to obtain the output current feedback.

It should be noted that the current feedback transfer function is determined by the technician according to requirements for a current in actual conditions.

In the embodiments of the present disclosure, the dual closed-loop nonlinear control unit calculates the control instruction of the real-time pulse width modulation gate-level circuit based on data of the fuel cell and data the DC-DC conversion circuit. The data of the fuel cell and the data the DC-DC conversion circuit are acquired in real time. The real-time pulse width modulation gate-level circuit regulates the output voltage and the output current of the DC-DC conversion circuit in response to the control instruction, to control the output power of the fuel cell to be within the predetermined power range, thereby improving practicability, controllability and stability of the system for controlling a fuel cell.

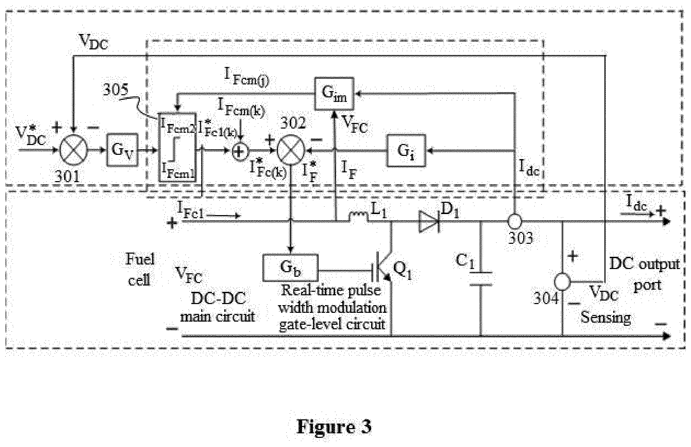

Corresponding to the method for controlling power according to the embodiments of the present disclosure, reference is made to Figure 3, which is a schematic structural diagram of a system for controlling a fuel cell according to an embodiment of the present disclosure. In Figure 3, 301 and 302 represent comparison modules, 303 represents a current sensor, 304 represents a voltage sensor, and 305 represents a nonlinear real-time adjustable limiting module. Gi represents a current feedback transfer function. $G_{im}$ represents a nonlinear real-time intervention transfer function. $G_v$ represents a voltage loop transfer function. $G_b$ represents a real-time pulse width modulation gate-level circuit. $D_1$

represents a boost blocking diode. $L_1$ represents a boost inductor. $C_1$ represents a filter capacitor. $Q_1$ represents a power electronic switch element in a DC-DC conversion circuit.

The comparison module 301 is configured to acquire a difference by subtracting an output voltage $V_{DC}$ of the DC-DC conversion circuit from a target output voltage $V^*_{DC}$. The difference is inputted to the voltage loop transfer function $G_v$ to obtain a current control instruction. A limitation current $I_{Fcm(j)}$ and the current control instruction are inputted to the nonlinear real-time adjustable limiting module 305 to limit the current control instruction, to obtain a target current $I^*_{Fcl(k)}$ inputted to the DC-DC conversion circuit by the fuel cell. The limitation current $I_{Fcm(j)}$ is obtained by inputting an output current $I_{dc}$ of the DC-DC conversion circuit and a cell output voltage $V_{FC}$ of the fuel cell to the nonlinear real-time intervention transfer function $G_{im}$.

A sum of the target current $I^*_{Fcl(k)}$ and a calculation instruction $I_{Fcm(k)}$ is calculated, to obtain a given current $I^*_{Fc(k)}$. The comparison module 302 is configured to acquire a difference by subtracting an output current feedback $I_F$ from the given current $I^*_{Fc(k)}$, to calculate the control instruction $I^*_F$ of the real-time pulse width modulation gate-level circuit. The output current feedback $I_F$ is obtained by inputting the output current $I_{dc}$ of the DC-DC conversion circuit to the filter capacitor $G_i$.

The real-time pulse width modulation gate-level circuit $G_b$ controls a duty cycle of the power electronic switch element $Q_1$ in response to the control instruction $I^*_F$, to regulate the output voltage and the output current of the DC-DC conversion circuit, so as to control output power of the fuel cell to be within the predetermined power range.

It should be noted that the structure of the system for controlling a fuel cell shown in Figure 3 is only for illustration.

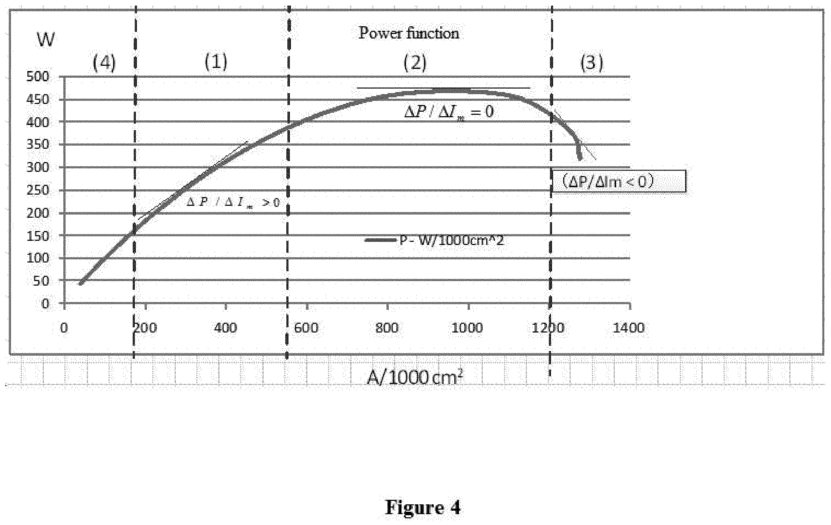

In order to explain the predetermined power range of the output power of the fuel cell, an example is described in conjunction with Figure 4, which is a schematic diagram showing division of the predetermined power range according to an embodiment of the present disclosure. The output voltage and the output current of the DC-DC conversion circuit cell are regulated, so that the output power of the fuel cell is controlled to be close to a range indicated by $\Delta P/\Delta I_m = 0$, as shown in a region (2) in Figure 4 . In Figure 4, a region (1) corresponds to a transition power range, the region (2) corresponds to an optimized power range, a region (3) corresponds to a high internal resistance range, and a region (4) corresponds to a light load and low power region.

It should be noted that the division of the power range shown in Figure 4 is only for illustration, and is determined by the technician according to actual conditions.

In the embodiments of the present disclosure, the dual closed-loop nonlinear control unit calculates the control instruction of the real-time pulse width modulation gate-level circuit based on data of the fuel cell and data of the DC-DC conversion circuit that are acquired in real time. The real-time pulse width modulation gate-level circuit regulates the output voltage and the output current of the DC-DC conversion circuit in response to the control instruction, to control the output power of the fuel cell to be within the predetermined power range, thereby improving practicability, controllability and stability of the system for controlling a fuel cell.

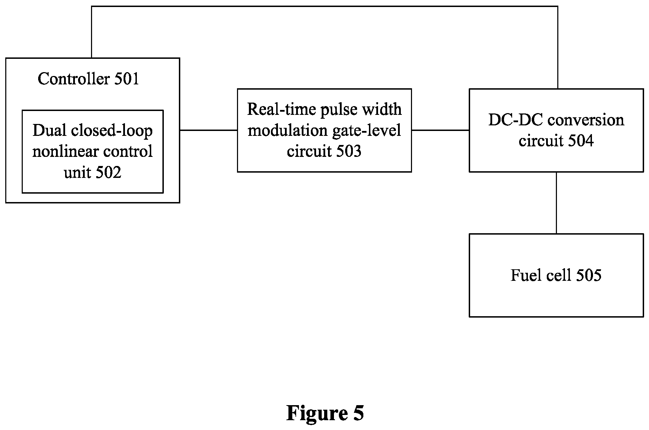

Reference is made to Figure 5, which is a structural block diagram of a system for controlling a fuel cell according to an embodiment of the present disclosure. The system includes a controller 501, a DC-DC conversion circuit 504 connected to the controller, and a real-time pulse width modulation gate-level circuit 503 connected to the DC-DC conversion circuit 504 and the controller 501. An input end of the DC-DC conversion circuit 504 is configured to connect a fuel cell 505. The controller 501 includes a dual closed-loop nonlinear control unit 502. The controller 501 is configured to acquire a cell output voltage, a cell output current, and cell output power of the fuel cell 505, as well as an output voltage and an output current of the DC-DC conversion circuit 504 in real time. For relevant details, one may refer to step S101 shown in Figure 1 according to the embodiment of the present disclosure.

The dual closed-loop nonlinear control unit 502 is configured to calculate a control instruction of the real-time pulse width modulation gate-level circuit 503 based on a target output voltage of the DC-DC conversion circuit 504, the cell output voltage, the cell output current, an calculation instruction, as well as the output voltage and the output current of the DC-DC conversion circuit 504. The calculation instruction is determined based on the cell output current and the cell output power. For relevant details, one may refer to step S102 shown in Figure 1 according to the embodiment of the present disclosure.

The real-time pulse width modulation gate-level circuit 503 is configured to regulate the output voltage and the output current of the DC-DC conversion circuit 504 in response to the control instruction, to control output power of the fuel cell to be within a predetermined power range. The predetermined power range is determined based on power indicated by $\Delta P/\Delta I_m = 0$, where $\Delta P$ represents a difference between present cell output power and previous cell output power. $\Delta I_m$ represents a difference between a present cell output current and a previous cell output current. For relevant details, one may refer to step S103 shown in Figure 1 according to the embodiment of the present disclosure.

Preferably, the real-time pulse width modulation gate-level circuit 503 is configured to regulate the output voltage and the output current of the DC-DC conversion circuit in response to the control instruction, to control output power of the fuel cell to be within a predetermined power range indicated by $(0-a) \leq \Delta P/\Delta I_m \leq (0+a)$, where a is a real number greater than or equal to 0.

Preferably, the controller 501 is further configured to transmit, in a case that $\Delta P/\Delta I_m$ is greater than $(0+a)$ or less than (0-a), a warning signal to a pre-stage controller. The pre-stage controller include at least a vehicle control unit.

In the embodiments of the present disclosure, the dual closed-loop nonlinear control unit calculates the control instruction of the real-time pulse width modulation gate-level circuit based on data of the fuel cell and data of the DC-DC conversion circuit that are acquired in real time. The real-time pulse width modulation gate-level circuit regulates the output voltage and the output current of the DC-DC conversion circuit in response to the control instruction, to control the output power of the fuel cell to be within the predetermined power range, thereby improving practicability, controllability and stability of the system for controlling a fuel cell.

Preferably, referring to Figures 3 and 5, the dual closed-loop nonlinear control unit 502 is configured to acquire a difference by subtracting the output voltage of the DC-DC conversion circuit from the target output voltage, to calculate a current control instruction according to a voltage loop transfer function. For relevant details, one may refer to step S201 shown in Figure 2 according to the embodiment of the present disclosure. The dual closed-loop nonlinear control unit 502 is further configured to limit the current control instruction based on a limitation current to obtain a target to be current inputted to the DC-DC conversion circuit 504 by the fuel cell 504. The limitation current is calculated according to a predetermined nonlinear real-time intervention transfer function based on the output current of the DC-DC conversion circuit and the cell output voltage. For relevant details, one may refer to step S202 shown in Figure 2 according to the embodiment of the present disclosure. The dual closed-loop nonlinear control unit 502 is further configured to calculate a sum of the target current and the calculation instruction to obtain a given current. For relevant details, one may refer to step S203 shown in Figure 2 according to an embodiment of the present disclosure. The dual closed-loop nonlinear control unit 502 is further configured to acquire a difference by subtracting an output current feedback from the given current, to calculate the control instruction of the real-time pulse width modulation gate-level circuit 503. The output current feedback is calculated according to a predetermined current feedback transfer function based on the output current of the DC-DC conversion circuit. For relevant details, one may refer to step S204 shown in Figure 2 according to the embodiment of the present disclosure.

In the embodiments of the present disclosure, the dual closed-loop nonlinear control unit calculates the control instruction of the real-time pulse width modulation gate-level circuit based on data of the fuel cell and data of the DC-DC conversion circuit that are acquired in real time. The real-time pulse width modulation gate-level circuit regulates the output voltage and the output current of the DC-DC conversion circuit in response to the control instruction, to control the output power of the fuel cell to be within the predetermined power range, thereby improving practicability, controllability and stability of the system for controlling a fuel cell.

Preferably, referring to Figures 3 and 5, the dual closed-loop nonlinear control unit 502 is further configured to calculate the calculation instruction $I_{Fcm}(k)$ according to the equation (1) based on a ratio of $\Delta P$ to $\Delta I_m$. $I_{Fcm}(k-1)$ represents a previous calculation instruction. $k_i$ represents a regulator parameter. $\Delta I_{Fcm}$ represents a predetermined signal increment of a current. $\Delta I_{Fcm}$ is determined based on the ratio of $\Delta P$ to $\Delta I_m$.

A method for controlling power and a system for controlling a fuel cell are provided according to the embodiments of the present disclosure. In the method, the controller acquires the cell output voltage, the cell output current, the cell output power, as well as the output voltage and the output current of the DC-DC conversion circuit in real time. The dual closed-loop nonlinear control unit calculates the control instruction of the real-time pulse width modulation gate-level circuit based on the target output voltage of the DC-DC conversion circuit, the cell output voltage, the cell output current, the calculation instruction, as well as the output voltage and the output current of the DC-DC conversion circuit. The real-time pulse width modulation gate-level circuit regulates the output voltage and the output current of the DC-DC conversion circuit in response to the control instruction to control the output power of the fuel cell to be within the predetermined power range. In the solutions according to the present disclosure, the dual closed-loop nonlinear control unit calculates the control instruction of the real-time pulse width modulation gate-level circuit based on data of the fuel cell and data of the DC-DC conversion circuit that are acquired in real time. The real-time pulse width modulation gate-level circuit regulates the output voltage and the output current of the DC-DC conversion circuit in response to the control instruction, to control the output power of the fuel cell to be within the predetermined power range, thereby improving practicability, controllability and stability of the system for controlling a fuel cell.

The embodiments in the specification are described in a progressive way. Each of the embodiments emphasizes the differences from others. For the same or similar parts among the embodiments, one may refer to description of other embodiments. Since the device disclosed in the embodiments corresponds to the method therein, the description of the device is relatively simple, and for relevant matters, one may refer to the description of the method embodiments.

Finally, it should be noted that in the present disclosure, relationship terms such as "first" and "second" are merely for distinguishing one entity or operation from another entity or operation rather than indicating or implying an actual relationship or order between these entities or operations. In addition, in this specification, terms of "include", "comprise" or any other variants are intended to be non-exclusive. Therefore, a process, method, article or device including multiple elements includes not only the elements but also other elements that are not enumerated, or also include elements inherent in the process, method, article or device. Unless expressively limited otherwise, the statement "comprising (including) one..." does not exclude a case that other similar elements may exist in the process, method, article or device.

For convenience of description, the device is divided into various units according to functions and the units are described separately. Apparently, the functions of the various units may be implemented in one or more software and/or hardware when implementing the present disclosure.

As can be seen from the above description of the embodiments, those skilled in the art can clearly understand that the present disclosure can be implemented by software plus a necessary general hardware platform. Based on the understanding, the technical solutions of the present disclosure essentially or a part of the technical solutions that contributes to the conventional technology may be implemented as a software product. The computer software product may be stored in a storage medium, such as an ROM/RAM, a magnetic disk and a compact disc. The computer software product includes several instructions executed by a computer device (including a personal computer, a server, a network side device and the like) to implement the embodiments of the present disclosure or the method described in part of the embodiments of the present disclosure.

With the description of the embodiments disclosed above, those skilled in the art may implement or use the present disclosure. Numerous modifications to the embodiments are apparent to those skilled in the art, and the general principles defined herein may be implemented in other embodiments without departing from the spirit or scope of the present disclosure. Therefore, the present disclosure is not limited to the embodiments described herein, but should comply with the widest scope consistent with the principles and novel features disclosed herein.

## Claims

1.  A method for controlling power, applicable to a system for controlling a fuel cell, wherein the system for controlling a fuel cell comprises a controller, a DC-DC conversion circuit connected to the controller, a real-time pulse width modulation gate-level circuit connected to the DC-DC conversion circuit and the controller, wherein an input end of the DC-DC conversion circuit is for connecting the fuel cell, and the controller comprises a dual closed-loop nonlinear control unit, and wherein the method comprises:

    acquiring, by the controller in real time, a cell output voltage, a cell output current, and cell output power of the fuel cell, and an output voltage and an output current of the DC-DC conversion circuit;
    calculating, by the dual closed-loop nonlinear control unit, a control instruction of the real-time pulse width modulation gate-level circuit based on a target output voltage of the DC-DC conversion circuit, the cell output voltage, the cell output current, a calculation instruction, the output voltage and the output current of the DC-DC conversion circuit, wherein the calculation instruction is determined based on the cell output current and the cell output power; and
    regulating, by the real-time pulse width modulation gate-level circuit, the output voltage and the output current of the DC-DC conversion circuit in response to the control instruction, to control output power of the fuel cell to be within a predetermined power range, wherein the predetermined power range is determined based on power indicated by $\Delta P/\Delta I_m=0$, wherein $\Delta P$ represents a difference between the cell output power and previous cell output power, and $\Delta I_m$ represents a difference between the cell output current and a previous cell output current.

2.  The method according to claim 1, wherein the calculating, by the dual closed-loop nonlinear control unit, a control instruction of the real-time pulse width modulation gate-level circuit based on a target output voltage of the DC-DC conversion circuit, the cell output voltage, the cell output current, a calculation instruction, the output voltage and the output current of the DC-DC conversion circuit comprises:

    acquiring a difference by subtracting the output voltage of the DC-DC conversion circuit from the target output voltage, to calculate a current control instruction from a voltage loop transfer function;
    limiting the current control instruction based on a limitation current to obtain a target to be current inputted to the DC-DC conversion circuit by the fuel cell, wherein the limitation current is calculated according to a predetermined nonlinear real-time intervention transfer function based on the output current of the DC-DC conversion circuit and the cell output voltage;
    calculating a sum of the target current and the calculation instruction to obtain a given current; and
    acquiring a difference by subtracting an output current feedback from the given current, to obtain the control instruction of the real-time pulse width modulation gate-level circuit, wherein the output current feedback is calculated according to a predetermined current feedback transfer function based on the output current of the DC-DC conversion circuit.

3.  The method according to claim 1, wherein the calculation instruction is determined based on the cell output current and the cell output power by:

calculating the calculation instruction $I_{Fcm}(k)$ according to an equation

$$I_{Fcm}(\,k\,)=\begin{cases} I_{Fcm}\,(k\text{-}1)+k_i * \Delta I_{Fcm}, & \Delta P / \Delta I_m > 0 \\ I_{Fcm}\,(k\text{-}1)-k_i * \Delta I_{Fcm}, & \Delta P / \Delta I_m < 0 \\ I_{Fcm}(\,k\text{-}1\,)\,, & \Delta P / \Delta I_m = 0 \end{cases}$$

based on a ratio of $\Delta P$ to $\Delta I_m$, wherein $I_{Fcm}(k\text{-}1)$ represents a previous calculation instruction, $k_i$ represents a regulator parameter; and $\Delta I_{Fcm}$ represents a predetermined signal increment of a current, and is determined based on the ratio of $\Delta P$ to $\Delta I_m$.

4. The method according to claim 1, wherein the regulating, by the real-time pulse width modulation gate-level circuit, the output voltage and the output current of the DC-DC conversion circuit in response to the control instruction, to control output power of the fuel cell to be within a predetermined power range comprises:
regulating, by the real-time pulse width modulation gate-level circuit, the output voltage and the output current of the DC-DC conversion circuit in response to the control instruction, to control the output power of the fuel cell to be within a predetermined power range indicated by $(0\text{-}a){\leq}\Delta P/\Delta I_m{\leq}(0\text{+}a)$, wherein a is a real number greater than or equal to 0.

5. The method according to claim 4, further comprising:

transmitting a warning signal to a pre-stage controller in a case that $\Delta P/\Delta I_m$ is greater than $(0\text{+}a)$ or less than $(0\text{-}a)$, wherein the pre-stage controller comprises at least a vehicle control unit.

6. A system for controlling a fuel cell, comprising a controller, a DC-DC conversion circuit connected to the controller, a real-time pulse width modulation gate-level circuit connected to the DC-DC conversion circuit and the controller, wherein an input end of the DC-DC conversion circuit is configured to connect the fuel cell, and the controller comprises a dual closed-loop nonlinear control unit, wherein

the controller is configured to acquire a cell output voltage, a cell output current, cell output power of the fuel cell, and an output voltage and an output current of the DC-DC conversion circuit in real time;
the dual closed-loop nonlinear control unit is configured to calculate a control instruction of the real-time pulse width modulation gate-level circuit based on a target output voltage of the DC-DC conversion circuit, the cell output voltage, the cell output current, a calculation instruction, the output voltage and the output current of the DC-DC conversion circuit, wherein the calculation instruction is determined based on the cell output current and the cell output power; and
the real-time pulse width modulation gate-level circuit is configured to regulate the output voltage and the output current of the DC-DC conversion circuit in response to the control instruction, to control output power of the fuel cell to be within a predetermined power range, wherein the predetermined power range is determined based on power indicated by $\Delta P/\Delta I_m = 0$, $\Delta P$ represents a difference between the cell output power and previous cell output power, and $\Delta I_m$ represents a difference between the cell output current and a previous cell output current.

7. The system according to claim 6, wherein the dual closed-loop nonlinear control unit is further configured to:

acquire a difference by subtracting the output voltage of the DC-DC conversion circuit from the target output voltage, to calculate a current control instruction according to a voltage loop transfer function;
limit the current control instruction based on a limitation current to obtain a target to be current inputted to the DC-DC conversion circuit by the fuel cell;
calculate a sum of the target current and the calculation instruction to obtain a given current; and
acquire a difference by subtracting an output current feedback from the given current, to obtain the control instruction of the real-time pulse width modulation gate-level circuit, wherein
the limitation current is calculated according to a predetermined nonlinear real-time intervention transfer function based on the output current of the DC-DC conversion circuit and the cell output voltage; and
the output current feedback is calculated according to a predetermined current feedback transfer function based on the output current of the DC-DC conversion circuit.

8. The system according to claim 6, wherein the dual closed-loop nonlinear control unit is further configured to:

$$I_{Fcm}(k)=\begin{cases} I_{Fcm}(k\text{-}1)+k_i*\Delta I_{Fcm}, & \Delta P/\Delta I_m > 0 \\ I_{Fcm}(k\text{-}1)-k_i*\Delta I_{Fcm}, & \Delta P/\Delta I_m < 0 \\ I_{Fcm}(k\text{-}1), & \Delta P/\Delta I_m = 0 \end{cases}$$

calculate the calculation instruction $I_{Fcm}(k)$ from an equation

based on a ratio of $\Delta P$ to $\Delta I_m$, wherein

$I_{Fcm}(k\text{-}1)$ represents a previous calculation instruction, $k_i$ represents a regulator parameter, and $\Delta I_{Fcm}$ represents a predetermined signal increment of a current, and is determined based on the ratio of $\Delta P$ to $\Delta I_m$.

9. The system according to claim 6, wherein the real-time pulse width modulation gate-level circuit is configured to regulate the output voltage and the output current of the DC-DC conversion circuit in response to the control instruction, to control the output power of the fuel cell to be within a predetermined power range indicated by (0-a)$\leq \Delta P/\Delta I_m \leq$(0+a), wherein a is a real number greater than or equal to 0.

10. The system according to claim 9, wherein the controller is further configured to transmit a warning signal to a pre-stage controller in a case that $\Delta P/\Delta I_m$ is greater than (0+a) or less than (0-a), wherein the pre-stage controller comprises at least a vehicle control unit.

A controller acquires a cell output voltage, a cell output current, and a cell output power of a fuel cell, as well as an output voltage and an output current of a DC-DC conversion circuit in real time

S101

A dual closed-loop nonlinear control unit calculates an control instruction of a real-time pulse width modulation gate-level circuit based on a target output voltage of the DC-DC conversion circuit, the cell output voltage, the cell output current, an calculation instruction, the output voltage and the output current of the DC-DC conversion circuit

S102

A real-time pulse width modulation gate-level circuit regulates the output voltage and the output current of the DC-DC conversion circuit based on the control instruction, to control a cell output power to be within a predetermined power range

S103

**Figure 1**

Acquire a difference by subtracting the output voltage from a target output voltage, to acquire a current control instruction from a voltage loop transfer function

S201

Limit the current control instruction based on a limitation current to obtain a target current inputted to the DC-DC conversion circuit by the fuel cell

S202

Calculate a sum of the target current and the calculation instruction to obtain a given current

S203

Acquire a difference by subtracting an output current feedback from the given current, to obtain the control instruction of the real-time pulse width modulation gate-level circuit

S204

**Figure 2**

**Figure 3**

**Figure 4**

Controller 501

Dual closed-loop
nonlinear control
unit 502

Real-time pulse width
modulation gate-level
circuit 503

DC-DC conversion
circuit 504

Fuel cell 505

**Figure 5**

## INTERNATIONAL SEARCH REPORT

| International application No. |
| --- |
| **PCT/CN2019/074187** |

**A. CLASSIFICATION OF SUBJECT MATTER**

H01M 8/04298(2016.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; ISI; CNKI: 潍柴动力, 功率, 燃料电池, 电压, 电流, 直流, DC, 脉宽调制, PWM, fuel cell, power, output, direct current, voltage, pulse width

**C. DOCUMENTS CONSIDERED TO BE RELEVANT**

| Category* | Citation of document, with indication, where appropriate, of the relevant passages | Relevant to claim No. |
| --- | --- | --- |
| A | CN 108767294 A (SOUTHWEST JIAOTONG UNIVERSITY) 06 November 2018 (2018-11-06) description, paragraphs [0007]-[0046] | 1-10 |
| A | CN 108493465 A (HUAZHONG UNIVERSITY OF SCIENCE AND TECHNOLOGY et al.) 04 September 2018 (2018-09-04) entire document | 1-10 |
| A | JP 2013027140 A (HONDA MOTOR CO., LTD.) 04 February 2013 (2013-02-04) entire document | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 August 2019** | **20 September 2019** |

| Name and mailing address of the ISA/CN | Authorized officer |
| --- | --- |
| **China National Intellectual Property Administration** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/074187**

| Patent document cited in search report | | | Publication date (day/month/year) | Patent family member(s) | | | Publication date (day/month/year) |
|---|---|---|---|---|---|---|---|
| CN | 108767294 | A | 06 November 2018 | None | | | |
| CN | 108493465 | A | 04 September 2018 | None | | | |
| JP | 2013027140 | A | 04 February 2013 | JP | 5887077 | B2 | 16 March 2016 |

Form PCT/ISA/210 (patent family annex) (January 2015)